# EUROPÄISCHE PATENTANMELDUNG

(11) **EP 2 292 346 A1**
(43) Veröffentlichungstag der Anmeldung: **09.03.2011**
(21) Anmeldenummer: 10008530.7
(22) Anmeldetag: 16.08.2010
(51) Int. Cl.: B21F 45/06, B60J 10/00

(54) **Drahtgrundkörper mit von Zugmitteln freiem Innenbereich**

(30) Priorität: 14.08.2009 DE 102009037599
(71) Anmelder: Rhodius GmbH, 91781 Weissenburg (DE)
(72) Erfinder: Kopetzky, Robert, 91207 Lauf (DE); Appel, Erwin, 91785 Pleinfeld (DE)
(74) Vertreter: Weigel, Matthias

(57) **Zusammenfassung**

Die Erfindung betrifft einen Drahtgrundkörper (1) zum Verstärken einer Dichtung aus elastischem Material, wie einer Türdichtung, wobei der Drahtgrundkörper (1) einerseits einen ersten Draht (2) aufweist, der sich in mäanderförmigen Buchten (3) entlang einer Längsachse (4) des Drahtgrundkörpers (1) erstreckt und um zumindest eine zur Längsachse (4) parallele Biegeachse (7) gebogen ist, sowie andererseits mehrere den ersten Draht (2) im Wesentlichen rechtwinklig kreuzende und vorzugsweise stauchfest ausgebildete Zugmittel (5) aufweist, die zum ersten Draht (2) lagebezogen relativ zueinander festgelegt sind, wobei alle Zugmittel (5) zur Biegeachse (7) beabstandet angeordnet sind. Die Erfindung betrifft ferner eine Dichtung mit einem entsprechenden Drahtgrundkörper.

## Beschreibung

Die Erfindung betrifft einen Drahtgrundkörper zum Verstärken einer Dichtung aus elastischem Material, wie eine Türdichtung, wobei der Drahtgrundkörper einerseits einen ersten Draht aufweist, der sich in mäanderförmigen Buchten entlang einer Längsachse des Drahtgrundkörpers erstreckt und um zumindest eine zur Längsachse parallele Biegeachse gebogen ist, sowie andererseits mehrere den ersten Draht im Wesentlichen rechtwinklig kreuzende und vorzugsweise stauchfest ausgebildete Zugmittel aufweist, die zum ersten Draht lagebezogen relativ zueinander festgelegt sind.

Die Erfindung betrifft auch eine Dichtung mit einem Drahtgrundkörper, wobei die Dichtung insbesondere als Autotürdichtung bei einem Kraftfahrzeug, wie einem Pkw oder Lkw Anwendung findet. Sie findet aber auch in der Luft- und Schifffahrt sowie bei öffentlichen Verkehrsmitteln, die auch schienengebunden sein können, und bei Industriefahrzeugen Anwendung. Es ist ferner ein stationärer Einsatz in Gebäuden vorgesehen.

Unter Draht wird hier ein relativ dünnes, langes und biegsames Stück Metall mit beliebigem, vorzugsweise kreisförmigem, Querschnitt verstanden. Als Querschnittsformen des Drahtes werden dabei auch Rechtecksquerschnitte, wie sie bei Flachdrähten vorkommen, Polygonquerschnitte und elliptische Querschnitte umfasst. Die Drähte sind insbesondere aus Eisen, Kupfer, Messing, Aluminium, Silber, Gold oder Edelstahl sowie entsprechenden Legierungen bestehend. Insbesondere sind Legierungen mit Magnesium umfasst.

Unter Zugmittel werden sämtliche Elemente verstanden, die in der Längsrichtung zugfest ausgebildet sind. Dies umfasst Gewebebänder, Fasern, Filamente und Fäden einerseits, aber auch Drähte andererseits. Für diese Zugmittel bietet sich die Verwendung unterschiedlicher Materialien, wie Metalle und deren Legierungen, an. Allerdings sind auch bestimmte textile Materialien und Kunststoffmaterialien, sowie Aramidfasern und Kohlestofffasern und Glasfasern geeignet.

Auch können Garne verwendet werden. Diese Garne können nicht nur zur zusätzlichen Fixierung der Garne relativ zu dem Draht verklebt, beschichtet und/oder mit Harz getränkt werden. So kann einerseits ein bei einem Aufwickeln verursachtes Verschieben der Garne relativ zum Draht verhindert werden und andererseits das Gesamtgebilde, also der Drahtkörper, versteift bzw. verfestigt werden.

Aus dem Stand der Technik sind Drahtgrundkörper nach dem Oberbegriff von Anspruch 1 bekannt. Solche Drahtgrundkörper werden beispielsweise von der Firma Hope Global als Produkte unter der Markenbezeichnung "Form-A-Grip" vertrieben. Dabei sind die Zugmittel aus Fasern oder Drähten ausgebildet und im Wesentlichen äquidistant zueinander über die gesamte Breite des Drahtgrundkörpers verteilt.

Die Drahtgrundkörper, die als Verstärkung von Türdichtungen Verwendung finden, geben den Türdichtungen eine ausreichende Formsteifigkeit. Die entsprechenden Drahtgrundkörper sind nach Fertigstellung der Türdichtung von dem elastischen Material, wie Gummi oder gummiähnlichem Kunststoff umgeben. Der entsprechende Drahtgrundkörper bildet ein sogenanntes Endoskelett und ist in die Türdichtung eingebettet. Eine weitere Gegendichtung greift in die durch die U-förmige Biegung gebildete Nut dann ein, wenn die durch die Tür zu verschließende Öffnung abgedichtet ist.

Da die Türdichtung im Regelfall um die gesamte Außenkante der Tür umlaufend ausgestaltet ist, muss der Drahtgrundkörper mehrmals um eine Umformachse gebogen werden, wobei die Umformachse orthogonal zur Längsachse bzw. zur Biegeachse ausgerichtet ist.

Beim Biegen des Drahtgrundkörpers um die Umformachse treten Spannungen im Inneren des Drahtgrundkörpers auf. So befinden sich die Enden der Buchten auf einem gedachten ersten Kreis, die einen geringeren Radius aufweist, als der den Enden der Buchten gegenüberliegende Bereich. D.h., der den Buchten gegenüberliegende Bereich des Drahtgrundkörpers liegt nach dem Umbiegen um die Umformachse nämlich auf einem gedachten Kreis, mit einem zu dem ersten Kreis größeren Radius.

Im Stand der Technik werden durch die Zugmittel sowohl die Enden der Buchten als auch die von den Enden der Buchten beabstandeten Bereiche des Drahtgrundkörpers in ihrer Position direkt oder indirekt festgelegt.

Ein Ausbauchen des Drahtgrundkörpers ist allerdings häufig die Folge, wenn der U-förmige Vorformling um die Umformachse gebogen wird. Die dabei auftretenden Spannungen können so stark sein, dass der Drahtgrundkörper an einigen Stellen bricht. Dies beeinträchtigt dann die Formstabilität und Formsteifigkeit des Drahtgrundkörpers negativ. Dadurch verschlechtert sich auch die Formhaltigkeit der Türdichtung.

Aus dem Stand der Technik sind auch Alternativen zu solchen Drahtgrundkörpern bekannt, nämlich aus geschlitzten Blechen gefertigte Grundkörper, wobei von einem Verbindungssteg sich gegenüberliegende, von dem Verbindungssteg abstehende Laschen, angeordnet sind. Die Laschen auf einer Seite des Verbindungssteges sind zueinander äquidistant angeordnet.

Solche auch als geschlitzte Bleche bezeichnete Grundkörper sind um eine Biegeachse U-förmig gebogen ausgebildet, wobei die Biegeachse parallel zu einer Längsachse des Bleches im Bereich des Verbindungssteges angeordnet ist.

Die vorher beschriebenen Bruchprobleme, die mit einem Ausbauchen auf der Innenseite des Drahtgrundkörpers, also im Bereich der Enden der Buchten auftreten, sind bei solchen geschlitzten Blechen nicht festzustellen, da die Enden der Laschen zueinander nicht festgelegt sind.

Allerdings sind solche geschlitzten Bleche in der Herstellung wesentlich teurer als aus Draht gefertigte Grundkörper.

Es ist daher die Aufgabe der vorliegenden Erfindung, Grundkörper aus Draht der Allgemeinheit zur Verfügung zu stellen, die so kostengünstig wie bisherige Drahtgrundkörper sind, aber die Vorteile von aus geschlitzten Blechen gefertigten Grundkörpern aufweisen. Die Nachteile der bisherigen Lösungen sollen vermieden werden.

Diese Aufgabe wird erfindungsgemäß dadurch gelöst, dass alle Zugmittel zur Biegeachse beabstandet angeordnet sind.

Auf diese Weise ist zwar einerseits noch sichergestellt, dass der Draht zueinander lagebezogen festgelegt ist und somit kein "Auseinanderfallen" des Drahtes erfolgt, wodurch eine ausreichende Formhaltigkeit gegeben ist, und andererseits keine bisher problematischen Brucheigenschaften nach Verformung um die Umformachse auftreten.

Die Aufgabe wird auch dadurch gelöst, dass eine Dichtung einen solchen Drahtgrundkörper umfasst.

Vorteilhafte Ausführungsbeispiele sind in den Unteransprüchen beansprucht und werden nachfolgend näher erläutert.

So ist es von Vorteil, wenn alle Zugmittel von den durch die Buchten bestimmten Rändern des Grundkörpers beabstandet sind. Auf diese Weise haben die einzelnen Drähte des Drahtgrundkörpers zueinander noch genügend Bewegungsspielraum, um die beim Umformen des Drahtgrundkörpers um die Umformachse auftretenden Spannungen auszugleichen. Ein solches Ausführungsbeispiel ist dann besonders von Vorteil, wenn nur zwei Zugmittel verwendet werden.

Eine größere Variabilität wird des Weiteren erreicht, wenn der Drahtgrundkörper um zwei Biegeachsen, die zur Längsachse beide parallel oder quer angeordnet sind, im Wesentlichen U-förmig gebogen ist. Sind die zwei Biegeachsen quer zu der Längsachse angeordnet, so kann auch zwischen jeder der Biegeachsen und der Längsachse ein zum anderen abweichender Winkel vorliegen.

Es ist ferner von Vorteil, wenn die Zugmittel ausschließlich in einem Anbringbereich angeordnet sind, der zwischen 0,1 b und 0,4 b und/oder zwischen 0,6 b und 0.9 b befindlich ist, wobei b die durch die seitlichen Ränder festgelegte Breite des Grundkörpers im unverbogenen Zustand ist. Die Fertigbarkeit eines solchen Drahtgrundkörpers wird auf diese Weise deutlich verbessert.

Die Bruchprobleme werden dann besonders effizient vermieden, wenn der Anbringbereich zwischen 0,15 b und 0,3 b und/oder zwischen 0,7 b und 0,85 b befindlich ist.

Wenn der erste Draht mit den Zugmitteln, die in einer Variante als Variante als zweite Drähte ausgebildet sind, durch einen oder mehrere dritte Drähte lagebezogen relativ zueinander festgelegt ist, so kann auf die Verwendung von Lot für das Ausbilden von stoffschlüssigen Verbindungen zwischen den einzelnen Drähten verzichtet werden. Eine gewisse Grundelastizität des Drahtgrundkörpers wird somit verbessert.

Die Fertigbarkeit wird dann verbessert, wenn der Drahtgrundkörper als Gewirk, wie ein Gestrick oder eine Häkelware, ausgebildet ist. Es ist dabei ferner von Vorteil, wenn der erste Draht und die Zugmittel aus ein und demselben Drahtmaterial gebildet sind. Dabei ist es nicht notwendig, dass die einzelnen Abschnitte voneinander getrennt ausgebildet sind.

Besonders schnell lässt sich der Drahtgrundkörper fertigen, wenn dieser als Geflecht ausgebildet ist.

Um die Dauerfestigkeit des Drahtgrundkörpers zu erhöhen, ist es von Vorteil, wenn zumindest einer der Drähte eine Korrosionsbeschichtung aufweist.

Um die Kosten für die Korrosionsbeschichtung zu mindern, ist es von Vorteil, wenn diese als Ölbeschichtung oder als chemischer Schutz ausgeführt ist. Zwar ist es auch möglich, Zinkbeschichtungen zu verwenden, doch werden bei Ausgestaltung gemäß des eben skizzierten Ausführungsbeispiels günstigere Ausgangsmaterialien verwendbar. Die Ölbeschichtung weist auch noch den zusätzlichen Vorteil auf, dass diese bei dem Biegen der einzelnen Drähte die Oberflächenreibung verringert, was zu einer besseren Güte des Drahtgrundkörpers führt.

Wenn der Drahtgrundkörper zumindest um eine quer zur Biegeachse angeordnete Umformachse gebogen ist, so ist dieser direkt in Folgeprodukten verwendbar.

Wenn die Umformachse orthogonal zur Biegeachse angeordnet ist, so können kostengünstige Maschinen bei der Herstellung verwendet werden und der Drahtgrundkörper nachbearbeitungsfrei bei einer entsprechenden Dichtung weiterverwendet werden.

Die Erfindung wird nachfolgend auch mit Hilfe einer Zeichnung näher erläutert.

Es zeigen:
- Fig. 1: einen unverbogenen Drahtgrundkörper der von der Firma Hope Global un- ter der Bezeichnung Form-A-Grip vertrieben wird,
- Fig. 2: einen unverbogenen aus einem geschlitzten Blech gefertigten Grundkörper aus dem Stand der Technik,
- Fig. 3: einen erfindungsgemäßen unverbogenen Drahtgrundkörper,
- Fig. 4: ein zweites Ausführungsbeispiel eines erfindungsgemäßen Drahtgrundkör- pers im unverbogenen Zustand,
- Fig. 5: das in Fig. 4 als IV gezeichnete Detail,
- Fig. 6: einen um eine Biegeachse U-förmig gebogenen erfindungsgemäßen Drahtgrundkörper basierend auf dem Ausführungsbeispiel gemäß Fig. 4 und
- Fig. 7: einen um die Biegeachse und die Umformachse gebogenen Drahtgrund- körper basierend auf dem Ausführungsbeispiel gemäß Fig. 3.

Die Figuren sind lediglich schematischer Natur und dienen nur dem Verständnis der Erfindung.

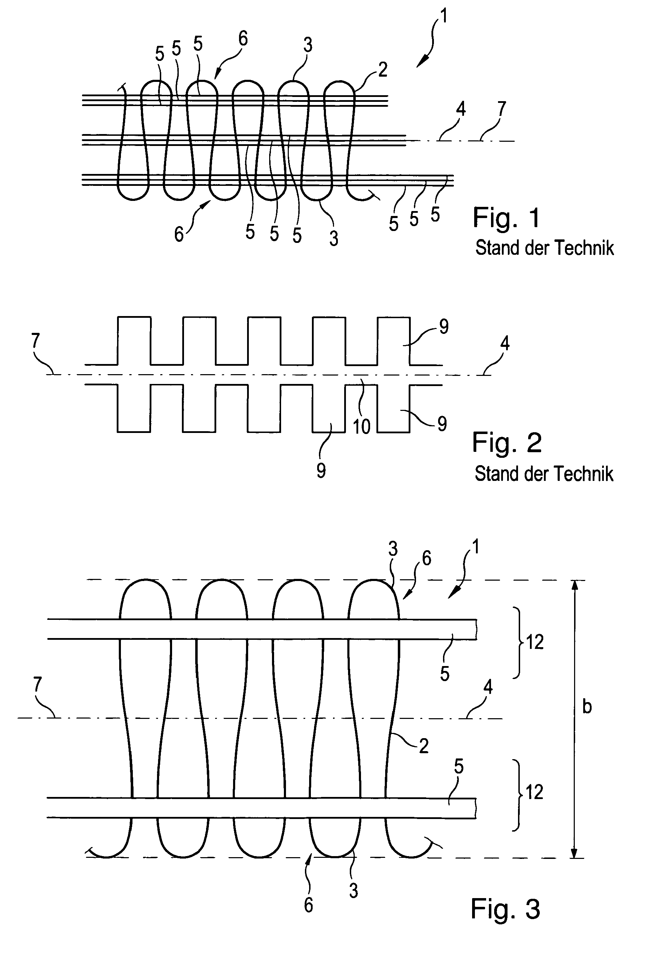

In Fig. 1 ist ein Drahtgrundkörper 1 dargestellt. Der Drahtgrundkörper 1 weist einen ersten Draht 2 auf. Der erste Draht 2 erstreckt sich in mäanderförmigen Buchten 3 entlang einer Längsachse 4 des Drahtgrundkörpers. Mehrere Zugmittel 5 erstrecken sich parallel zur Längsachse 4 über dem ersten Draht 2 und/oder unter diesem. Insgesamt sind neun Zugmittel 5 dargestellt, die sowohl um die Längsachse 4 herum angeordnet sind, als auch an Endbereichen 6 der Buchten 3 mit dem ersten Draht verbunden sind. Die als zweite Drähte ausgebildeten Zugmittel 5 und der erste Draht 2 sind miteinander in Kontakt.

Der Drahtgrundkörper 1 aus Fig. 1 ist im flachen Zustand dargestellt und wird für den fertigen Zustand zweimal gebogen, nämlich einmal um eine Biegeachse 7, die immer parallel zur Längsachse 4 ausgerichtet ist und im dargestellten Fall deckungsgleich mit dieser ist. Nachfolgend wird der dabei erreichte Vorformling um eine in Fig. 1 nicht dargestellte Umformachse 8 gebogen.

Ein weiterer Grundkörper ist in Fig. 2 dargestellt. Dieser Grundkörper ist jedoch nicht aus Draht gebildet, sondern aus geschlitztem Blech. Das geschlitzte Blech weist Laschen 9 auf, die über einen Verbindungssteg 10 miteinander in Verbindung stehen. Der Verbindungssteg 10 beherbergt auch eine Längsachse 4, zu der die Laschen 9 symmetrisch sind.

Auch dieser Grundkörper ist noch im unverbogenen Zustand dargestellt und wird ebenfalls um eine Biegeachse 7 U-förmig zu dem Vorformling verbogen. Die Biegeachse 7 liegt deckungsgleich auf der Längsachse 4.

In Fig. 3 ist ein erstes Ausführungsbeispiel der Erfindung dargestellt.

Wie auch in dieser Figur werden in allen Figuren für die gleichen Elemente dieselben Bezugszeichen verwendet.

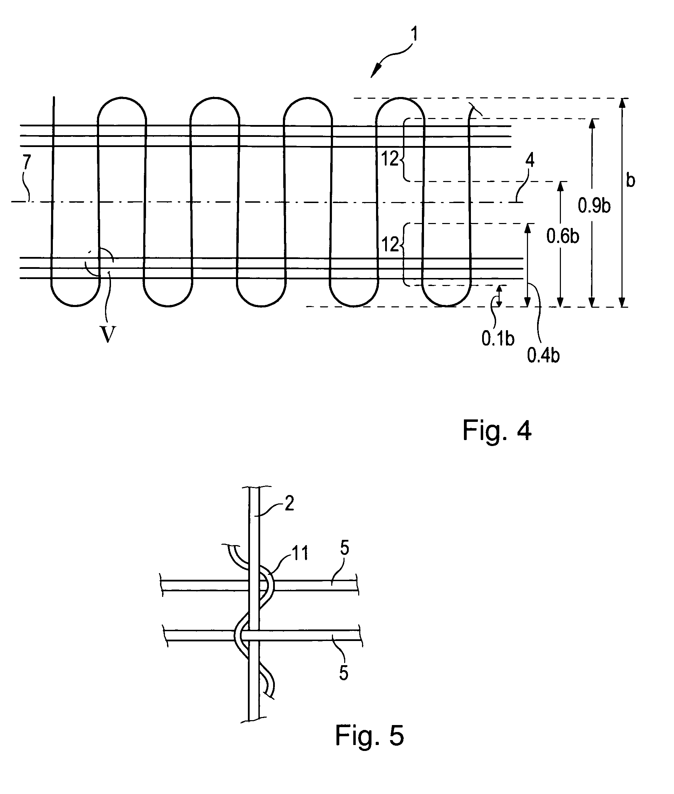

Der in Fig. 3 dargestellte erfindungsgemäße Drahtgrundkörper 1 ist noch in unverbogenem Zustand dargestellt und weist eine Breite b auf, die durch die maximale Ausdehnung der Endbereiche 6 der Buchten 3 festgelegt ist. Der erste Draht 2 wird von zwei aus zweiten Drähten ausgebildete Zugmittel 5 umschlossen. Die zweiten Drähte können als zopfartige Drähte ausgebildet sein. Zur Verbindung des ersten Drahtes 2 mit den zweiten Drähten bieten sich Strick- und/oder Häkeltechniken an. Zusätzlich ist es möglich, in den Berührungsbereichen des ersten Drahtes 2 mit den zweiten Drähten Kleber einzubringen, insbesondere UVaushärtenden Kleber. Die Verwendung eines solchen Klebers bietet sich auch in anderen Ausführungsbeispielen an, insbesondere in dem nach den Fig. 4, 5 und 6 dargestellten Ausführungsbeispiel.

Auch die Verwendung von Löt- oder Schweißverbindungen ist denkbar. Insbesondere bietet sich ein Rollnahtschweißverfahren an. Dadurch können die als Drähte ausgebildeten Zugmittel 5 an unterschiedlichen Stellen mit dem in einer Schlaufengeometrie vorliegenden Draht 2 fixiert werden. Auch eine Fixierung unter Einsatz eines Lasers ist von Vorteil, da dann eine Fertigung im Durchlaufverfahren erleichtert wird. Werden Flachdrähte verwendet, ist dies vorteilhaft für eine bzgl. der Biegesteifigkeit optimierten Ausgestaltung.

In Fig. 4 ist dieses zweite Ausführungsbeispiel eines erfindungsgemäßen Drahtgrundkörpers 1 dargestellt. Hier sind insgesamt sechs aus jeweils zweite Drähten ausgebildete Zugmittel 5 vorhanden, die beabstandet zu der Biegeachse 7, die in den beiden Ausführungsbeispielen deckungsgleich mit der Längsachse 4 ist, angeordnet sind. Jeweils zwei zweite Drähte 5 sind auf der einen Seite der Biegeachse 7 angeordnet.

Der Detailabschnitt V ist in Fig. 5 näher dargestellt, wobei aus dieser Figur dann ersichtlich wird, dass ein dritter Draht 11 für die Lagefestlegung des ersten Drahtes 2 zu den als zweite Drähte ausgebildeten Zugmitteln 5 zuständig ist. Der dritte Draht 11 umgreift abwechselnd den ersten Draht 2 und die zweiten Drähte.

Aus Fig. 4 ist auch die Anordnung eines Anbringbereiches beiderseits der Biegeachse 7 entnehmbar. Dieser Anbringbereich 12 ist zwischen 10% und 40 % der Breite bzw. zwischen 60 % und 90 % der Breite b des Drahtgrundkörpers 1 in unverbogenem Zustand angeordnet.

Auch in dem Ausführungsbeispiel gemäß Fig. 3 ist der Anbringbereich in einem vergleichbaren Abschnitt angeordnet, wie bei dem Ausführungsbeispiel gemäß Figur 4.

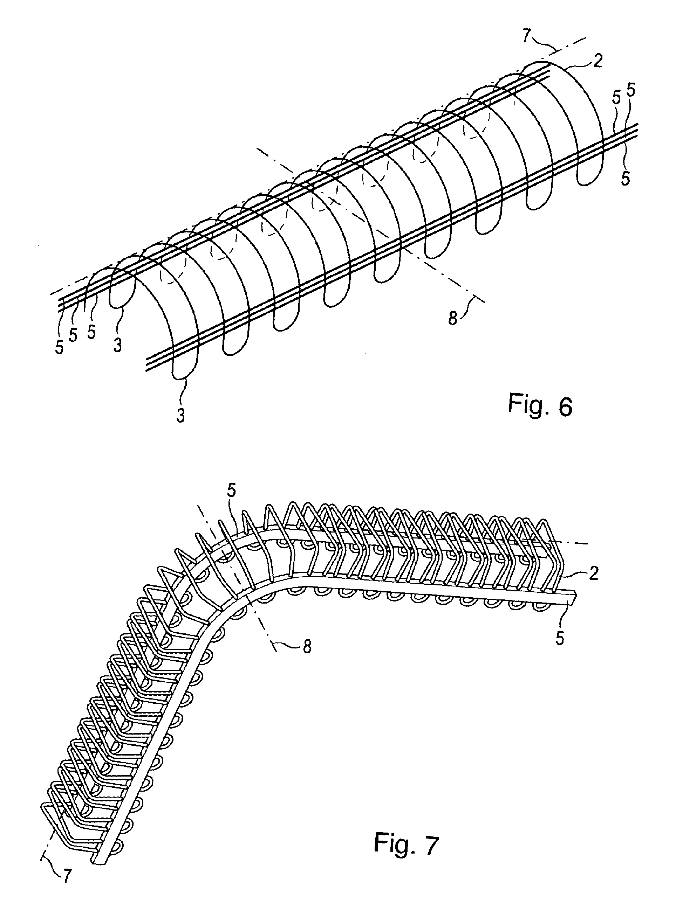

In Fig. 6 ist für beide Ausführungsbeispiele exemplarisch die U-förmige Ausformung des Drahtgrundkörpers am Beispiel des zweiten Ausführungsbeispiels dargestellt. Die nachfolgende Umbiegung des Vorformlings um die Umformachse 8 ist noch nicht dargestellt. Aus Gründen der Übersichtlichkeit sind die hinteren Buchten 3 des ersten Drahtes 2 nur gestrichelt dargestellt. Auch sind die hinten liegenden, als zweite Drähte ausgebildeten Zugmittel 5 nur abschnittsweise dargestellt.

In Fig. 7 ist der zweifach umgebogene Drahtgrundkörper 1 des ersten Ausführungsbeispieles dargestellt. Es ist gut zu erkennen, dass die beiden Zugmittel 5 in den Bereich einer neutralen Faser des zweifach umgebogenen Drahtgrundkörpers 1 gelegt sind.

Der fertiggestellte Drahtgrundkörper 1 wird dann von Gummi, Kautschuk oder ähnlichen Materialien umspritzt, um so die fertige Außentürdichtung zu bilden.

Als Materialien für die einzelnen Drähte bietet sich Kohlenstoffstahl an. Solche Drähte sollen eine Zugfestigkeit von 700 bis 900 N/mm2 aufweisen, vorzugsweise 36 g/m wiegen und einen Durchmesser von 0,75 mm haben.

Drähte mit einem flachen Querschnitt und einer hohen Zugfestigkeit, die 4,5 g/m wiegen, bieten sich zur Verwendung als Zugmittel 5 oder als dritter Draht 11 an. Es ist jedoch auch möglich, dass sowohl für den ersten Draht 2 als auch für die als zweite Drähte ausgebildeten Zugmittel 5 und/oder den dritten Draht 11 dieselbe Drahtsorte verwendet wird.

Es bietet sich an, den Draht zu verzinken oder vorzugsweise unverzinkt zu verwenden, jedoch dann auf eine Ölbenetzung oder einen chemischen Korrosionsschutz zu achten.

Unterschiedliche Querschnitte, auch nur abschnittsweise variierende Querschnitte, haben sich ebenfalls als vorteilhaft herausgestellt, nämlich elliptische, polygonale, runde und rechteckförmige Querschnitte. Der Bereich in dem sich die Drähte berühren kann auch komprimiert ausgestaltet sein.

Bei der Herstellung bietet sich ferner an, auf Häkel- oder Strickmaschinen zurückzugreifen.

### Bezugszeichenliste:

- 1: Drahtgrundkörper
- 2: Draht
- 3: Bucht
- 4: Längsachse
- 5: Zugmittel
- 6: Endbereich
- 7: Biegeachse
- 8: Umformachse
- 9: Lasche
- 10: Verbindungssteg
- 11: Faser
- 12: Anbringbereich

## Patentansprüche

1. Drahtgrundkörper zum Verstärken einer Dichtung aus elastischem Material, wie einer Türdichtung, wobei der Drahtgrundkörper (1) einerseits einen ersten Draht (2) aufweist, der sich in mäanderförmigen Buchten (3) entlang einer Längsachse (4) des Drahtgrundkörpers (1) erstreckt und um zumindest eine zur Längsachse (4) parallele Biegeachse (7) gebogen ist, sowie andererseits mehrere den ersten Draht (2) im Wesentlichen rechtwinklig kreuzende und vorzugsweise stauchfest ausgebildete Zugmittel (5) aufweist, die zum ersten Draht (2) lagebezogen relativ zueinander festgelegt sind, **dadurch gekennzeichnet, dass** alle Zugmittel (5) zur Biegeachse (7) beabstandet angeordnet sind.

2. Drahtgrundkörper nach Anspruch 1, **dadurch gekennzeichnet, dass** alle Zugmittel (5) von den durch die Buchten (3) bestimmten Rändern des Grundkörpers (1) beabstandet sind und/oder der Drahtgrundkörper (1) um zwei Biegeachsen (7) im Wesentlichen U-förmig gebogen ist.

3. Drahtgrundkörper nach Anspruch 2, **dadurch gekennzeichnet, dass** die Zugmittel (5) ausschließlich in einem Anbringbereich (12) angeordnet sind, der zwischen 0,1 b und 0,4 b und/oder zwischen 0,6 b und 0,9 b befindlich ist, wobei b die durch die seitlichen Ränder festgelegte Breite des Grundkörpers im unverbogenem Zustand ist.

4. Drahtgrundkörper nach Anspruch 3, **dadurch gekennzeichnet, dass** der Anbringbereich (12) zwischen 0,15 b und 0,3 b und/oder zwischen 0,7 b und 0,8 b befindlich ist.

5. Drahtgrundkörper nach einem der Ansprüche 1 bis 4, **dadurch gekennzeichnet, dass** der erste Draht (2) mit den Zugmitteln (5) durch einen oder mehrere dritte Drähte (11) lagebezogen relativ zueinander festgelegt ist.

6. Drahtgrundkörper nach einem der Ansprüche 1 bis 5, **dadurch gekennzeichnet, dass** der Drahtgrundkörper (1) als Gewirk, wie ein Gestrick oder eine Häkelware, ausgebildet ist.

7. Drahtgrundkörper nach einem der Ansprüche 1 bis 5, **dadurch gekennzeichnet, dass** der Drahtgrundkörper (1) als Geflecht ausgebildet ist.

8. Drahtgrundkörper nach einem der Ansprüche 1 bis 7, **dadurch gekennzeichnet, dass** zumindest einer der Drähte eine Korrosionsbeschichtung aufweist.

9. Drahtgrundkörper nach Anspruch 8, **dadurch gekennzeichnet, dass** die Korrosionsbeschichtung als Ölbeschichtung oder als chemischer Schutz ausgeführt ist.

10. Drahtgrundkörper nach einem der Ansprüche 1 bis 9, **dadurch gekennzeichnet, dass** der Drahtgrundkörper (1) um zumindest eine quer zur Biegeachse (7) angeordnete Umformachse (8) gebogen ist.

11. Drahtgrundkörper nach Anspruch 10, **dadurch gekennzeichnet, dass** die Umformachse (8) orthogonal zur Biegeachse (7) angeordnet ist.

12. Dichtung mit einem Drahtgrundkörper (1) nach einem der vorhergehenden Ansprüche.
